# EUROPÄISCHE PATENTSCHRIFT

(11) **EP 2 808 200 B1**
(45) Veröffentlichungstag und Bekanntmachung des Hinweises auf die Patenterteilung: **10.07.2019**
(21) Anmeldenummer: 14466009.9
(22) Anmeldetag: 16.05.2014
(51) Int. Cl.: B60P 7/08

(54) **Wickelvorrichtung im Fahrzeugladeraum**
Winding device in a vehicle cargo compartment
Dispositif d'enroulement dans l'espace de rangement d'un véhicule

(30) Priorität: 27.05.2013 CZ 20130387
(43) Veröffentlichungstag der Anmeldung: 03.12.2014
(73) Patentinhaber: Skoda Auto A.S., 293 60 Mladá Boleslav (CZ)
(72) Erfinder: Langr, David, CZ-51702 Kvasiny (CZ)

(56) Entgegenhaltungen:
- WO-A1-89/09588
- DE-A1-102005 030 165
- DE-A1-102005 037 715
- DE-B3-102006 023 028

## Beschreibung

### Technisches Gebiet

Die Erfindung betrifft eine Wickelvorrichtung zur Ladegutsicherung im Fahrzeugladeraum.

### Bisheriger Stand der Technik

Aus dem Stand der Technik ist die im Dokument DE 10 2006 023 028 B3 beschriebene Lösung bekannt.

In der WO 89/09588 A1 ist eine Rückhaltevorrichtung offenbart. Die Vorrichtung umfasst einen Griff und ein Standfuß. Diese sind derart geformt, dass sie mit vorgesehenen Halterelementen verwendet werden können. Die Rückhaltevorrichtung weist einen manuell zu betätigenden Auslöser auf, der ein gleichzeitiges Lösen eines Verriegelungselements des Standfußes und eines Verriegelungselements eines Gurts ermöglicht.

In der DE 10 2005 037 715 A1 ist eine Vorrichtung zur Aufnahme eines Spanngurts offenbart. Die Vorrichtung umfasst eine Aufwickelrolle und eine Feststellvorrichtung zum Festsetzen des Spanngurts.

In der DE 10 2005 030 165 A1 ist eine Befestigungsvorrichtung zum Haltern und/oder Sichern von Gegenständen in einem Laderaum eines Kraftfahrzeugs offenbart.

Die Ladegutsicherungseinrichtung im Laderaum eines Kraftfahrzeuges umfasst eine Wickelvorrichtung mit Wickelgehäuse, mittels dem die Wickelvorrichtung zu der längsseitig im Fahrzeugladeraum angeordneten Lastschiene befestigt ist. Aus der Wickelvorrichtung kann ein Gurtband abgewickelt werden, das am Stirnendbereich einen Haken aufweist, mittels dem das Gurtband zu der an der anderen Längsseite des Fahrzeugladeraumes angeordneten Lastschiene einhängbar ist. Die Wickelvorrichtung umfasst einen Schwenkhebel, mittels der die Abwicklung des Gurtbandes blockiert oder freigegeben und gleichzeitig die Position der Wickelvorrichtung in der Lastschiene arretiert werden kann.

Zu den Nachteilen des bekannten Standes der Technik gehört die zu große Ratsche der Wickelvorrichtung sowie die benötigte große Kraft für die Abwicklung des Gurtbandes. Die Wickelvorrichtung kann nicht beim hochgestellten Ladeboden genutzt werden, d.h. sie ist nicht ausreichend kompakt.

Die bekannte Wickelvorrichtung ermöglicht zudem nicht, das fixierte Gegenstand festzuspannen. Dazu dient nur die Wickelfeder der Wickelvorrichtung, was zu Folge hat, dass die Spannkraft beschränkt ist. Ferner können Gegenstände im Laderaum nicht in der vertikalen Achse fixiert werden.

### Darstellung der Erfindung

Die Aufgabe wird durch die vorliegende erfindungsgemäße technische Lösung gelöst.

Die vorliegende Lösung ermöglicht das nachfolgende Straffen des Gurtbandes, dies bedeutet, dass der Gegenstand im Laderaum praktisch in allen Richtungen fixiert werden kann.

Das Gurtband der vorliegenden Wickelvorrichtung, meistens aus Textilgewebe ausgeführt, wird in das Wickelgehäuse mittels einer Feder aufgewickelt. In der Wickelwelle der Wickelvorrichtung ist ein Mechanismus eingebaut, der das Straffen des Gurtbandes mittels einer drehbaren Rosette ermöglicht. Die Rosette ermöglicht die Umschaltung der Wickelvorrichtung in eine Betriebsart, in der nur die Wickelfeder wirkt, sowie in die andere Betriebsart, in der das Gurtband gestrafft werden kann. Diese zweite Betriebsart funktioniert auf dem Prinzip eines Sperrrades und zwei verschiebbaren Sperrklinken. Das gesamte Gehäuse der Wickelvorrichtung ist für den Einbau - das Einstecken - in die Lastschiene im Laderaum vorbereitet. Mittels der Drucktaste kann die komplette Wickelvorrichtung in der Lastschiene verschoben bzw. arretiert werden. Das entgegengesetzte Ende des Gurtbandes weist einen Griff mit Arretierung auf. Dieser Griff wird in die zweite Lastschiene im Laderaum eingelegt. Zum Entsperren und Versperren des Griffes in der Lastschiene dient die Drucktaste mit Hebelmechanismus. Das ganze System kann auch in der vertikalen Stellung angewendet werden.

### Übersicht der Figuren der Zeichnungen

Die Erfindung wird anhand schematischer Zeichnungen näher erläutert, wobei zeigen die Fig. 1 eine perspektivische Ansicht der in der Lastschiene eingesetzten Wickelvorrichtung in der Ruhestellung, die Fig. 2 die perspektivische Ansicht der Wickelvorrichtung in der Arbeitsstellung, die Fig. 3 eine Explosionsdarstellung der Wickelvorrichtung, die Fig. 4 die Struktur der Teile der Wickelvorrichtung unter der Rosette in Arretierstellung, also die Kulisse mit Sperrklinken und das Sperrrad in einer Innenansicht, die Fig. 5 die Struktur der Teile der Wickelvorrichtung unter der Rosette in Freigabestellung und die Fig. 6 die gleiche Struktur in Arretierstellung, beide in einer Ansicht von der Rosette aus.

### Bezugszeichenliste

1 - Wickelvorrichtung
2 - Wickelgehäuse
3 - Griff
4 - Drucktaste des Griffes
5 - Griffsockel
6 - Betätigungstaste
7 - Rosette
8 - Sperrrad
9,9' - Sperrklinken
10 - Kulisse
11 - Wickelwelle der Wickelvorrichtung
12 - Wickelfeder
13 - Stöpsel der Rosette
14 - Abdeckung der Wickelvorrichtung
15 - Abdeckung der Wickelfeder
16 - Stöpsel der Abdeckung der Wickelfeder
17, 18 - Betätigungstastenfeder
20, 20' - Bolzen der Sperrklinken
21 - Innenverzahnug des Sperrrades
22 - Zapfen des Sperrrades
23 - Eindellung an der Wickelvorrichtungsabdeckung
24 - Flansch
25, 25' - Nuten
90 - Gurtband
100, 101 - Lastschienen

### Ausführungsbeispiele der Erfindung

Die Erfindung wird anhand der Figuren näher erläutert.

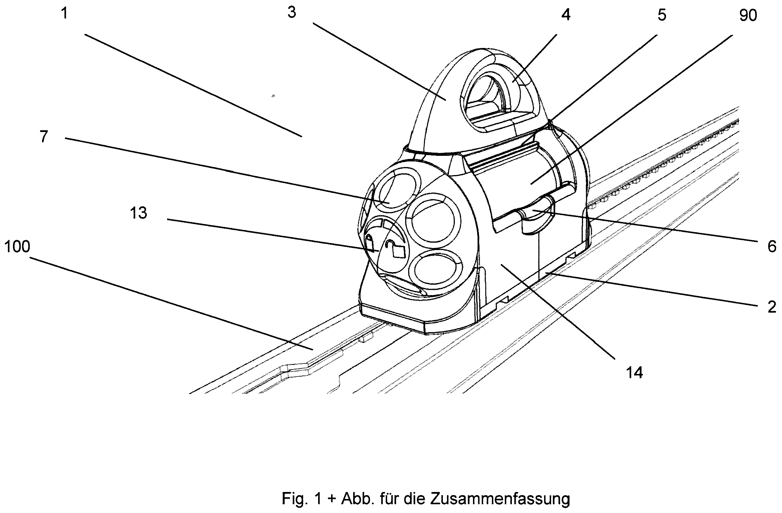

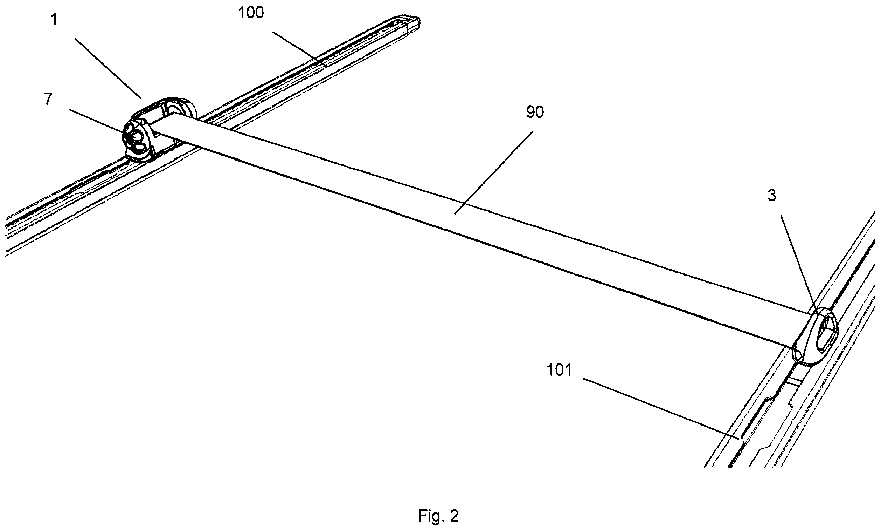

Die Fig. 1 zeigt die perspektivische Ansicht der in der Lastschiene 100 eingesetzten Wickelvorrichtung 1 in der Ruhestellung. Die Wickelvorrichtung 1 weist ein Wickelgehäuse 2 auf, mittels dessen sie mit der an der Längsseite des Fahrzeugladeraumes angeordneten Lastschiene 100 verbunden ist. Aus dem Gehäuse der Wickelvorrichtung 1 kann ein Gurtband 90 abgewickelt werden, dessen Ende mit dem Griff 3 an die an der anderen Längsseite des Fahrzeugladeraumes angeordneten Lastschiene 101 befestigbar ist. Dies ist in Fig. 2 dargestellt.

Die Wickelvorrichtung 1 weist einen an dem Ende des Gurtbandes 90 befestigten Griff 3 mit einer Drucktaste 4 auf, mittels der die Fixierung des Sockels 5 des Griffes 3 in der Lastschiene 101 betätigt wird. Beim Drücken der Drucktaste 6 ist die Wickelvorrichtung 1 frei in der Lastschiene 100 verschiebbar. Beim Loslassen der Drucktaste 6 wird über ein Hebelmechanismus im Gehäuse die Wickelvorrichtung 1 bzw. das Wickelgehäuse 2 in der Lastschiene 100 arretiert. Dadurch wird eine Bewegung der Wickelvorrichtung 1 in der Lastschiene 100 verhindert.

Ferner weist die Wickelvorrichtung 1 eine schwenkbare Rosette 7 auf, mit der das Mechanismus für das Abwickeln des Gurtbandes 90 betätigt wird.

Die schwenkbare Rosette 7 hat zwei Stellungen und kann rechts oder links verschwenkt werden. In der einen Arbeitsstellung (Freigabestellung) der Rosette 7 kann das Gurtband 90 von der bzw. auf die Wickelvorrichtung 1 ab- oder aufgewickelt werden.

In der zweiten Arbeitsstellung (Arretierstellung) wird das Abwickeln des Gurtbandes 90 von der Wickelvorrichtung 1 blockiert. In der Praxis erfolgt die Ladegutfixierung im Laderaum wie folgt. Der Fahrzeugbediener legt das Ladegut auf den Fahrzeugladeraumboden. Die Wickelvorrichtung 1 muss in der Lastschiene 100 möglichst nah an das Ladegut verschoben werden. Der Fahrzeugbediener fasst mit der Hand den Griff 3 und drückt die Drucktaste 4. Die Rosette 7 wird in die Arbeitsstellung verschwenkt (Freigabestellung). Der Fahrzeugbediener zieht am Griff 3, wobei der Gurtband 90 von der Wickelvorrichtung 1 abgewickelt und zur Lastschiene 101 hinbewegt und in diese eingelegt wird. Danach lässt er die Drucktaste 4 los, wodurch der Griff 3 bzw. sein Sockel 5 mittels eines Hebelmechanismen in der Lastschiene 101 fixiert wird. Zum Schluss wird die Rosette 7 verschwenkt, wodurch das Abwickeln des Gurtbandes 90 von der Wickelvorrichtung 1 blockiert wird.

Beide Arbeitsstellungen können an dem Stöpsel 13 der Rosette 7 mit Piktogrammen markiert werden.

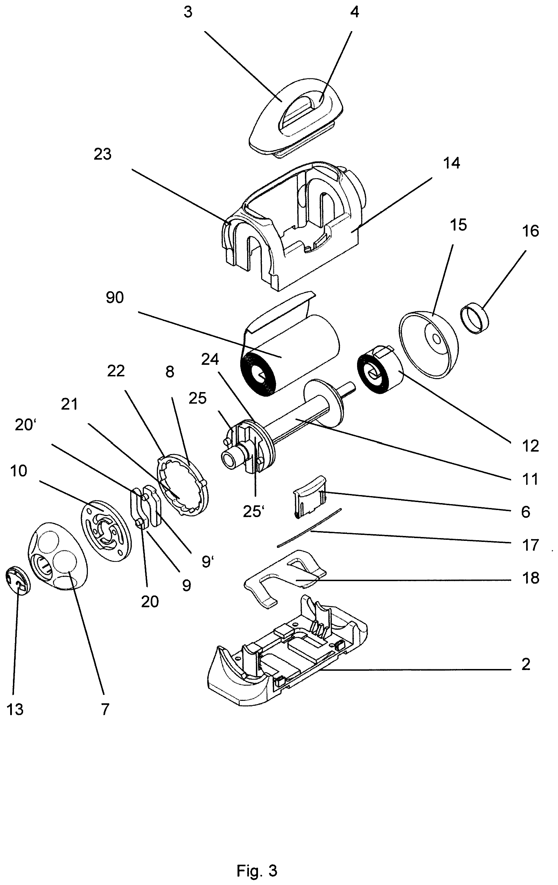

Die Fig. 3 zeigt in einer Explosionsdarstellung die einzelnen Teile der Wickelvorrichtung. Der Betätigungsmechanismus für das Abwickeln des Gurtbandes 90, der mit der schwenkbaren Rosette 7 betätigbar ist, umfasst einen Sperrrad 8, zwei verschiebbare Sperrklinken 9, 9' und eine Kulisse 10. Der Betätigungsmechanismus für das Abwickeln des Gurtbandes 90 ist schwenkbar mit der Wickelwelle 11 der Wickelvorrichtung 1 verbunden, die durch die Wickelfeder 12 vorgespannt ist. Die Sperrklinken 9, 9' sind verschiebbar in den Nuten 25, 25' des Flansches 24 der Wickelwelle 11 der Wickelvorrichtung 1 angeordnet. Ein Ende der Wickelwelle 11 der Wickelvorrichtung 1 ist schwenkbar in der Kulisse 10 und in der Rosette 7 gelagert.

Der Sperrrad 8 ist fest mit der Abdeckung 14 der Wickelvorrichtung 1 verbunden. Der Sperrrad 8 ist mit der Abdeckung 14 der Wickelvorrichtung 1 mittels wenigstens eines Zapfens 22 am Sperrrad 8 und wenigstens einer Eindellung 23 an der Abdeckung 14 der Wickelvorrichtung 1 verbunden.

Die Wickelvorrichtung 1 weist eine Abdeckung 14 sowie eine Abdeckung 15 der Wickelfeder 12 auf, die an einem Ende mit der Wickelwelle 11 der Wickelvorrichtung 1 und an dem anderen Ende mit der Abdeckung 14 der Wickelvorrichtung 1 verbunden ist.

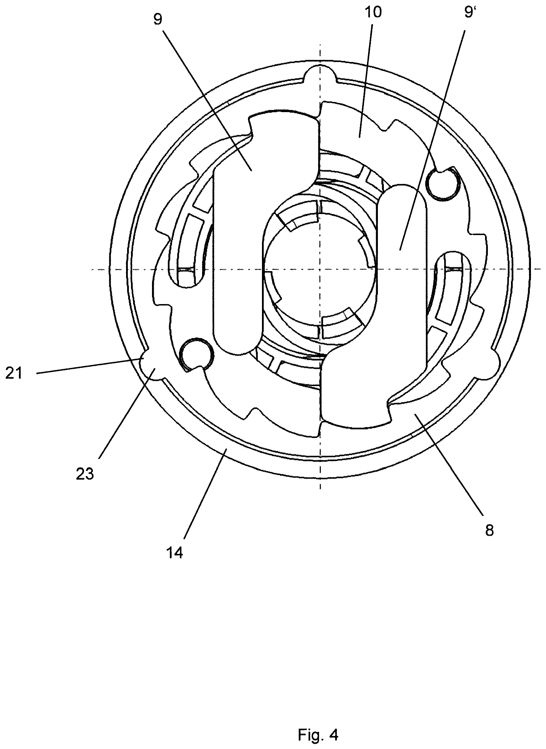

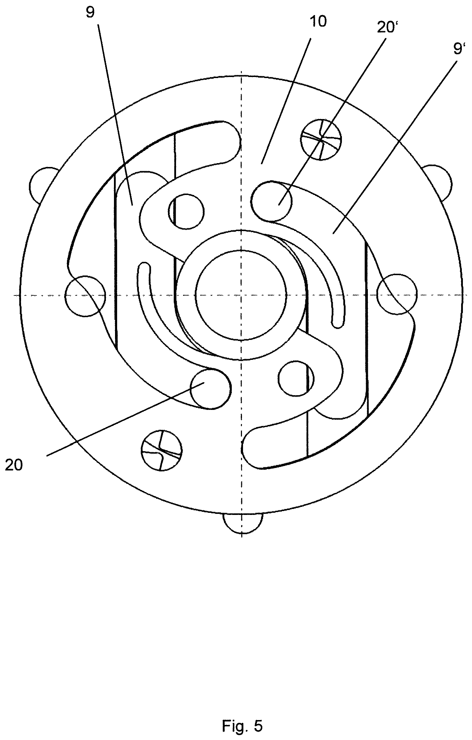

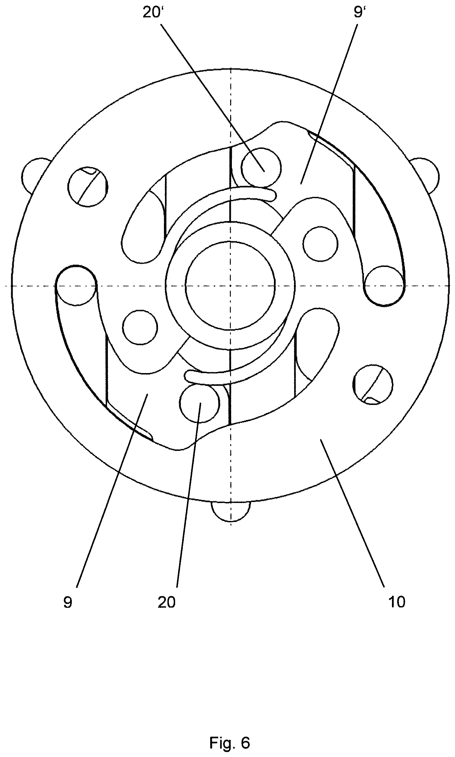

Die Fig. 4 zeigt die Struktur der Teile der Wickelvorrichtung 1 unter der Rosette 7 in Arretierstellung, also die Kulisse 10 mit Sperrklinken 9,9' in einer Innenansicht der Wickelvorrichtung, die Fig. 5 zeigt die Struktur der Wickelvorrichtung 1 unter der Rosette 7 in der Freigabestellung und die Fig. 6 zeigt die gleiche Struktur in Arretierstellung, beide in einer Ansicht von der Rosette 7 aus.

Die Sperrklinken 9, 9' weisen Bolzen 20, 20' auf, die in die Formnuten in der Kulisse 10 eingreifen.

In der Freigabestellung der Rosette 7 werden die Sperrklinken 9, 9' mittels der fest mit der Rosette 7 verbundenen Kulisse 10 in Richtung vom Sperrrad so weggeschoben, dass sie in die Verzahnung 21 nicht eingreifen.

In der Arretierstellung der Rosette 7 werden die Sperrklinken 9, 9' mittels der fest mit der Rosette 7 verbundenen Kulisse 10 so verschoben, dass sie in die Verzahnung 21 des Sperrrades 8 eingreifen.

Die Lastschienen 100, 101 sind in einer weiteren vorteilhaften Ausführung an den Querseiten des Fahrzeugladeraumes angeordnet.

## Patentansprüche

1. Wickelvorrichtung (1) für einen Fahrzeugladeraum, wobei
- der Fahrzeugladeraum eine erste Lastschiene (100) und eine zweite Lastschiene (101) aufweist,
- die Wickelvorrichtung (1) ein Wickelgehäuse (2) aufweist, das für einen Einbau in die erste Lastschiene (100) vorbereitet ist,
- die Wickelvorrichtung (1) ein Gurtband (90) aufweist und die Wickelvorrichtung (1) dazu eingerichtet ist, aus dem Wickelgehäuse (2) der Wickelvorrichtung (1) ein Abwickeln des Gurtbands (90) zu ermöglichen,
- die Wickelvorrichtung (1) an einem Ende des Gurtbandes (90) einen Griff (3) aufweist, der zum Einlegen in die zweite Lastschiene (101) des Laderaums eingerichtet ist,
- die Wickelvorrichtung (1) eine schwenkbare Rosette (7) aufweist, die zur Betätigung eines Betätigungsmechanismen für ein Abwickeln und ein Aufwickeln des Gurtbandes (90) eingerichtet ist,
**dadurch gekennzeichnet, dass**
- der Griff (3) dazu eingerichtet ist, bei einem Loslassen einer Drucktaste (4) des Griffes (3), einen Sockel (5) des Griffes (3) mittels eines Hebelmechanismus in der zweiten Lastschiene (101) zu fixieren,
- die Wickelvorrichtung (1) dazu eingerichtet ist, bei einem Loslassen einer Betätigungstaste (6) der Wickelvorrichtung (1) das Wickelgehäuse (2) über einen Hebelmechanismus in der ersten Lastschiene (100) zu arretieren,
- die Wickelvorrichtung (1) dazu eingerichtet ist, bei einem Drücken der Betätigungstaste (6) der Wickelvorrichtung (1) ein verschieben des Wickelgehäuses (2) in der ersten Lastschiene (100) zu ermöglichen.

2. Wickelvorrichtung (1) für einen Fahrzeugladeraum nach Anspruch 1,
**dadurch gekennzeichnet, dass** der Betätigungsmechanismus für das Ab- und Aufwickeln des Gurtbandes (90), der mit der schwenkbaren Rosette (7) betätigbar ist, einen Sperrrad (8), zwei verschiebbare Sperrklinken (9, 9') und eine Kulisse (10) umfasst, wobei der Betätigungsmechanismus für das Ab- und Aufwickeln des Gurtbandes (90) schwenkbar mit der Wickelwelle (11) der Wickelvorrichtung (1) verbunden ist, die durch die Wickelfeder (12) vorgespannt ist.

3. Wickelvorrichtung (1) für einen Fahrzeugladeraum nach Anspruch 2, **dadurch gekennzeichnet, dass** die schwenkbare Rosette (7) zwei Stellungen hat, wobei in der einen Arbeitsstellung (Freigabestellung) der Rosette (7) auf die Wickelwelle (11) der Wickelvorrichtung (1) nur die Wickelfeder (12) wirkt und in der zweiten Arbeitsstellung (Arretierstellung) die Drehbewegung der Wickelwelle (11) der Wickelvorrichtung durch den Betätigungsmechanismus für das Ab- und Aufwickeln des Gurtbandes (90) blockiert ist.

4. Wickelvorrichtung (1) für einen Fahrzeugladeraum nach vorgenannten Ansprüchen, **dadurch gekennzeichnet, dass** der Sperrrad (8) fest mit der Abdeckung (14) der Wickelvorrichtung (1) verbunden ist.

5. Wickelvorrichtung (1) für einen Fahrzeugladeraum nach Anspruch 2, **dadurch gekennzeichnet, dass** der Sperrrad (8) mit der Abdeckung (14) der Wickelvorrichtung (1) mittels wenigstens eines Zapfens (22) am Sperrrad (8) und wenigstens einer Eindellung (23) an der Abdeckung (14) der Wickelvorrichtung (1) verbunden ist.

6. Wickelvorrichtung (1) für einen Fahrzeugladeraum nach vorgenannten Ansprüchen, **dadurch gekennzeichnet, dass** in der Freigabestellung der Rosette (7) die Sperrklinken (9, 9') mittels der fest mit der Rosette (7) verbundenen Kulisse (10) in Richtung vom Sperrrad so weggeschoben werden, dass sie in die Verzahnung (21) nicht eingreifen.

7. Wickelvorrichtung (1) für einen Fahrzeugladeraum nach vorgenannten Ansprüchen, **dadurch gekennzeichnet, dass** in der Arretierstellung der Rosette (7) die Sperrklinken (9, 9') mittels der fest mit der Rosette (7) verbundenen Kulisse (10) so verschoben ist, dass sie in die Verzahnung (21) des Sperrrades (8) eingreifen.

8. Wickelvorrichtung (1) für einen Fahrzeugladeraum nach vorgenannten Ansprüchen, **dadurch gekennzeichnet, dass** die Lastschienen (100, 101) an den Querseiten des Fahrzeugladeraumes angeordnet sind.

9. Wickelvorrichtung (1) für einen Fahrzeugladeraum nach vorgenannten Ansprüchen 1 - 7, **dadurch gekennzeichnet, dass** die Lastschienen (100, 101) an den Längsseiten des Fahrzeugladeraumes angeordnet sind.

## Claims

1. Winding device (1) for a vehicle trunk, wherein
- the vehicle trunk comprises a first load rail (100) and a second load rail (101),
- the winding device (1) comprises a winding housing (2) which is designed to be installed in the first load rail (100),
- the winding device (1) comprises a strap (90), and
- the winding device (1) is designed to allow the winding device (1) to unwind the strap (90) from the winding housing (2),
- the winding device (1) comprises a handle (3) at one end of the strap (90), which is designed for insertion into the second load rail (101) of the trunk,
- the winding device (1) comprises a pivotable excutcheon (7), which is designed to operate an operating mechanism for unwinding and rewinding the strap (90),
**characterized in that**
- upon release of a push button (4) of the handle (3), the handle (3) is designed to fix a base (5) of the handle (3) in the second load rail (101) by means of a lever mechanism,
- upon release of an actuating button (6) of the winding device (1), the winding device (1) is designed to lock the winding housing (2) in the first load rail (100) via a lever mechanism,
- upon pressing the actuating button (6) of the winding device (1), the winding device (1) is designed to allow the winding housing (2) to be displaced in the first load rail (100).

2. Winding device (1) for a vehicle trunk according to claim 1.
**characterized in that** the actuating mechanism for the unwinding and rewinding of the strap (90), which is operable with the pivoting excutcheon (7), comprises a ratchet wheel (8), two displaceable pawls (9, 9') and a link (10), wherein the operating mechanism for the winding and unwinding of the strap (90) is pivotally connected to the winding shaft (11) of the winding device (1), which is biased by the coil spring (12).

3. Winding device (1) for a vehicle trunk according to claim 2, **characterized in that** the pivotable excutcheon (7) has two positions, wherein only the coil spring (12) acts on the winding shaft (11) of the winding device (1) in the one working position (release position) of the excutcheon (7), while the rotational movement of the winding shaft (11) of the winding device is blocked in the second working position (locking position) by the operating mechanism for unwinding and winding of the strap (90).

4. Winding device (1) for a vehicle trunk according to the preceding claims, **characterized in that** the ratchet wheel (8) is firmly connected to the cover (14) of the winding device (1).

5. Winding device (1) for a vehicle trunk according to claim 2, **characterized in that** the ratchet wheel (8) is connected with the cover (14) of the winding device (1) by means of at least one pin (22) on the ratchet wheel (8) and at least one indentation (23) on the cover (14) of the winding device (1).

6. Winding device (1) for a vehicle trunk according to the preceding claims, **characterized in that** in the release position of the excutcheon (7), the pawls (9, 9') are pushed away in the direction of the ratchet wheel so that they do not interfere with the toothing (21) by means of the link (10) fixed to the excutcheon (7).

7. Winding device (1) for a vehicle trunk according to the aforementioned 11 claims, **characterized in that** in the locked position of the excutcheon (7), the pawls (9, 9') are so displaced that they engage in the toothing (21) of the ratchet wheel (8) by means of the link (10) fixed to the excutcheon (7).

8. Winding device (1) for a vehicle trunk according to the preceding claims, **characterized in that** the load rails (100, 101) are arranged on the transverse sides of the vehicle trunk.

9. Winding device (1) for a vehicle trunk according to the aforementioned claims 1 - 7, **characterized in that** the load rails (100, 101) are arranged on the longitudinal sides of the vehicle trunk.

## Revendications

1. Dispositif d'enroulement (1) pour un espace de chargement d'un véhicule,
- l'espace de chargement d'un véhicule comportant un premier rail de charge (100) et un deuxième rail de charge (101),
- le dispositif d'enroulement (1) comportant un carter d'enroulement (2) qui est préparé pour un montage dans le premier rail de charge (100),
- le dispositif d'enroulement (1) comportant une sangle (90), et le dispositif d'enroulement (1) étant agencé pour permettre un déroulement de la sangle (90) à partir du carter d'enroulement (2) du dispositif d'enroulement (1),
- le dispositif d'enroulement (1) comportant, à une extrémité de la sangle (90), une poignée (3) qui est agencée pour l'insertion dans le deuxième rail de charge (101) de l'espace de chargement,
- le dispositif d'enroulement (1) comportant une rosace (7) pivotante qui est agencée pour l'actionnement d'un mécanisme d'actionnement pour un déroulement et un enroulement de la sangle (90),
**caractérisé en ce que**
- la poignée (3) est agencée pour, lors d'un relâchement d'un bouton-poussoir (4) de la poignée (3), fixer un socle (5) de la poignée (3) au moyen d'un mécanisme de levier dans le deuxième rail de charge (101),
- le dispositif d'enroulement (1) étant agencé pour, lors d'un relâchement d'un bouton d'actionnement (6) du dispositif d'enroulement (1), arrêter le carter d'enroulement (2) par le biais d'un mécanisme de levier dans le premier rail de charge (100),
- le dispositif d'enroulement (1) étant agencé pour, lors d'une pression sur le bouton d'actionnement (6) du dispositif d'enroulement (1), permettre un coulissement du carter d'enroulement (2) dans le premier rail de charge (100).

2. Dispositif d'enroulement (1) pour un espace de chargement d'un véhicule selon la revendication 1, **caractérisé en ce que** le mécanisme d'actionnement pour le déroulement et l'enroulement de la sangle (90), lequel peut être actionné avec la rosace (7) pivotante, comprend une roue à rochet (8), deux cliquets (9, 9') coulissants et une coulisse (10), le mécanisme d'actionnement pour le déroulement et l'enroulement de la sangle (90) étant raccordé en pivotement avec l'arbre d'enroulement (11) du dispositif d'enroulement (1) qui est pré-tendu par le ressort d'enroulement (12).

3. Dispositif d'enroulement (1) pour un espace de chargement d'un véhicule selon la revendication 2, **caractérisé en ce que** la rosace (7) pivotante a deux positions, seul le ressort d'enroulement (12) agissant sur l'arbre d'enroulement (11) du dispositif d'enroulement (1) dans une position de travail (position de libération) de la rosace (7), et le mouvement de rotation de l'arbre d'enroulement (11) du dispositif d'enroulement étant, dans la deuxième position de travail (position d'arrêt), bloqué par le mécanisme d'actionnement pour le déroulement et l'enroulement de la sangle (90).

4. Dispositif d'enroulement (1) pour un espace de chargement d'un véhicule selon les revendications précitées, **caractérisé en ce que** la roue à rochet (8) est raccordée de façon fixe au recouvrement (14) du dispositif d'enroulement (1).

5. Dispositif d'enroulement (1) pour un espace de chargement d'un véhicule selon la revendication 2, **caractérisé en ce que** la roue à rochet (8) est raccordée au recouvrement (14) du dispositif d'enroulement (1) au moyen d'au moins un tourillon (22) sur la roue à rochet (8) et d'au moins une dépression (23) sur le recouvrement (14) du dispositif d'enroulement (1).

6. Dispositif d'enroulement (1) pour un espace de chargement d'un véhicule selon les revendications précitées, **caractérisé en ce que,** dans la position de libération de la rosace (7), les cliquets (9, 9') sont, au moyen de la coulisse (10) raccordée de façon fixe à la rosace (7), poussés en direction de la roue à rochet de telle sorte qu'ils n'engrènent pas dans la denture (21).

7. Dispositif d'enroulement (1) pour un espace de chargement d'un véhicule selon les revendications précitées, **caractérisé en ce que,** dans la position d'arrêt de la rosace (7), les cliquets (9, 9') sont poussés au moyen de la coulisse (10) raccordée de façon fixe à la rosace (7) de telle sorte qu'ils engrènent dans la denture (21) de la roue à rochet (8).

8. Dispositif d'enroulement (1) pour un espace de chargement d'un véhicule selon les revendications précitées, **caractérisé en ce que** les rails de charge (100, 101) sont disposés sur les côtés transversaux de l'espace de chargement d'un véhicule.

9. Dispositif d'enroulement (1) pour un espace de chargement d'un véhicule selon les revendications précitées 1 - 7, **caractérisé en ce que** les rails de charge (100, 101) sont disposés sur les grands côtés de l'espace de chargement d'un véhicule.
